# EUROPEAN PATENT APPLICATION

(11) **EP 4 228 203 A1**
(43) Date of publication of application: **16.08.2023**
(21) Application number: 21878028.6
(22) Date of filing: 07.10.2021
(51) Int. Cl.: H04L 9/40, H04L 65/40, B60L 55/00, B60L 53/62, B60L 53/66

(54) **METHOD AND APPARATUS FOR EARLY RENEGOTIATION IN MESSAGE SEQUENCING BETWEEN ELECTRIC VEHICLE AND GRID**

(30) Priority: 07.10.2020 US 202063088519 P
(71) Applicant: HYUNDAI MOTOR COMPANY, Seoul 06797 (KR); Kia Corporation, Seocho-gu Seoul 06797 (KR); Myongji University Industry and Academia Cooperation Foundation, Gyeonggi-do 17058 (KR)
(72) Inventor: SHIN, Min Ho, Yongin-si, Gyeonggi-do 17058 (KR)
(74) Representative: Viering, Jentschura & Partner mbB Patent- und Rechtsanwälte
(86) International application number: PCT/KR2021/013810
(87) International publication number: WO 2022/075778

(57) **Abstract**

An early renegotiation method and apparatus are capable of quickly changing a communication state in changing a charging condition or charging environment, which can occur while performing a message exchange or a charging process between an electric vehicle and a grid. A method by which the electric vehicle performs early renegotiation in a message sequence between the electric vehicle and the grid includes steps of: receiving a service detail response message from a power supply device communication controller; searching for parameters that are compatible for direct current charging or alternating current charging; state-changing a service detail state into a vehicle positioning setup state for vehicle positioning by using automatic connection device or wireless power transmission, if compatible parameters cannot be found; and transmitting a vehicle positioning setup request message to the power supply device communication controller in the vehicle positioning setup state.

## Description

### BACKGROUND

### Technical Field

The present disclosure relates to a method for changing charging parameters or a charging process while performing message exchange or the charging process between an electric vehicle and a grid, more particularly, to a method and an apparatus for early renegotiation for quickly changing a communication state according to a change in charging conditions or charging environments that may occur while performing the message exchange or charging process between the electric vehicle and the grid.

### Description of the Related Art

A message sequence between a power network or grid and an electric vehicle (EV) may be performed in a form of exchanging a predetermined request message and a predefined response message between a supply equipment communication controller (SECC) located in the grid and an electric vehicle communication controller (EVCC) mounted on the EV.

The EV usually charges a vehicle battery using a charging scheme based on an automatic connection device or wireless power transfer, alternating current (AC) charging scheme, or direct current (DC) charging scheme. To charge the battery, the EV may exchange, with the SECC, messages related to session setup, vehicle positioning setup, vehicle positioning, pairing, authorization setup, authorization, service discovery, service detail, and service selection.

For example, after the EV receives a vehicle positioning setup response message, if the EV does not find a compatible method for positioning or pairing for an automatic connection device or wireless power transfer, the EV may transition from a session stop state to a service discovery state through service renegotiation.

However, in a message sequencing between the EV and the grid, which is described in ISO 15118-20, there is a limitation in not being able to quickly change a communication state in response to a change in charging conditions or charging environments occurring in the message exchange for the current charging process or during the charging process.

### SUMMARY

An objective of the present disclosure is to provide a method and an apparatus for early renegotiation in a message sequencing between an electric vehicle and a grid.

Another objective of the present disclosure is to provide a method and an apparatus for early renegotiation for quickly changing a communication state according to a change in charging conditions or charging environments that may occur while performing message exchange or a charging process between the electric vehicle and the grid.

An early renegotiation method according to an aspect of the present disclosure for achieving the technical objective may comprise, as an early renegotiation method performed by an electric vehicle in a message sequence between the electric vehicle and a grid, receiving a service detail response message from a supply equipment communication controller (SECC); searching for a compatible parameter for direct current charging or alternating current charging based on the service detail response message; if the compatible parameter is not found, changing a state from a service detail state to a vehicle positioning setup state for vehicle positioning using an automatic connection device or wireless power transfer; and transmitting a vehicle positioning setup request message to the SECC in the vehicle positioning setup state.

The changing of the state may be performed when a session stop response message having a response code set to `OK' is received in a state in which a charge progress parameter of a last session stop request message of a previous sequence is set to 'Renegotiation' or 'ServiceRenegotiation'.

The transmitting of the vehicle positioning setup request message to the SECC may be performed within a preset sequence performance timeout period.

The early renegotiation method may further comprise, before receiving the service detail response message, transmitting and receiving messages for service discovery with the SECC.

The early renegotiation method may further comprise, before receiving the service detail response message, establishing a transport layer security (TLS) connection.

The early renegotiation method may further comprise transmitting a supported application protocol (SAP) request message to the SECC after the TLS connection is completed.

The early renegotiation method may further comprise, after receiving an SAP response message for the SAP request message, transmitting a session setup request message to the SECC within a preset sequence performance timeout period.

An early renegotiation method according to another aspect of the present disclosure for achieving the technical objective may comprise, as an early renegotiation method performed by an electric vehicle in a message sequence between the electric vehicle and a grid, receiving a vehicle positioning setup response message from a supply equipment communication controller (SECC); searching for a compatible method for positioning or pairing for an automatic connection device or wireless power transfer; if the compatible method is not available, jumping from a vehicle positioning setup state to an authorization setup state in order to proceed to direct current charging or alternating current charging; and transmitting an authorization setup request message to the SECC in the authorization setup state.

The jumping may be performed when a session stop response message having a response code set to `OK' is received in a state in which a charge progress parameter of a last session stop request message of a previous sequence is set to 'Renegotiation' or 'ServiceRenegotiation'.

The transmitting of the authorization setup request message to the SECC may be performed within a preset sequence performance timeout period.

The early renegotiation method may further comprise, after transmitting the authorization setup request message to the SECC, transmitting a service discovery request message to the SECC.

The early renegotiation method may further comprise, before receiving the vehicle positioning setup response message, establishing a transport layer security (TLS) connection.

The early renegotiation method may further comprise transmitting a supported application protocol (SAP) request message to the SECC after the TLS connection is completed.

The early renegotiation method may further comprise, after receiving an SAP response message for the SAP request message, transmitting a session setup request message to the SECC within a preset sequence performance timeout period.

An early renegotiation method according to yet another aspect of the present disclosure for achieving the technical objective may comprise, as an early renegotiation method performed by an electric vehicle in a message sequence between the electric vehicle and a grid, receiving a service detail response message from a supply equipment communication controller (SECC); searching for a compatible parameter for direct current charging or alternating current charging based on the service detail response message; if the compatible parameter is not found, jumping from a service detail state to a vehicle positioning setup state for vehicle positioning using an automatic connection device or wireless power transfer; transmitting a vehicle positioning setup request message to the SECC in the vehicle positioning setup state; receiving a vehicle positioning setup response message from the SECC; searching for a compatible method for positioning or pairing for an automatic connection device or wireless power transfer; if the compatible method is not available, changing a state from the vehicle positioning setup state to an authorization setup state in order to proceed to direct current charging or alternating current charging; and transmitting an authorization setup request message to the SECC in the authorization setup state.

The changing of the state or the jumping may be performed when a session stop response message having a response code set to `OK' is received in a state in which a charge progress parameter of a last session stop request message of a previous sequence is set to 'ServiceRenegotiation'.

An early renegotiation apparatus according to yet another aspect of the present disclosure for achieving the technical objective may comprise, as an apparatus for performing early renegotiation in a message sequence between an electric vehicle and a grid, a memory storing program instructions; and a processor that is connected to the memory and executes the program instructions stored in the memory, wherein when executed by the processor, the program instructions may cause the processor to: perform receiving a service detail response message from a supply equipment communication controller (SECC); searching for a compatible parameter for direct current charging or alternating current charging based on the service detail response message; if the compatible parameter is not found, jumping from a service detail state to a vehicle positioning setup state for vehicle positioning using an automatic connection device or wireless power transfer; transmitting a vehicle positioning setup request message to the SECC in the vehicle positioning setup state; receiving a vehicle positioning setup response message from the SECC; searching for a compatible method for positioning or pairing for an automatic connection device or wireless power transfer; if the compatible method is not available, changing a state from the vehicle positioning setup state to an authorization setup state in order to proceed to direct current charging or alternating current charging; and transmitting an authorization setup request message to the SECC in the authorization setup state.

The program instructions may further cause the processor to perform the changing of the state or the jumping when a session stop response message having a response code set to `OK' is received in a state in which a charge progress parameter of a last session stop request message of a previous sequence is set to ' ServiceRenegotiation' .

According to the present disclosure, an early renegotiation method and apparatus are capable of quickly changing a communication state in response to a change in charging conditions or charging environments that may occur during message exchange between the EV and the grid or while performing the charging process.

In addition, the present disclosure provides flexibility and adaptability to a change in the charging conditions or environments in a message sequencing between the EV and the grid, thereby increasing user convenience and efficiency in the message exchange for the charging process.

### BRIEF DESCRIPTION OF THE DRAWINGS

FIG. 1 is a conceptual diagram for describing an electic vehicle (EV) wireless power transfer structure to which an early renegotiation method according to an exemplary embodiment of the present disclosure is applicable.
FIG. 2 is a conceptual diagram for describing an EV wired charging structure to which an early renegotiation method according to an exemplary embodiment of the present disclosure is applicable.
FIG. 3 is a block diagram illustrating a message sequencing for vehicle-to-grid (V2G) communication states in a comparative example.
FIG. 4 is a flowchart for describing an early renegotiation method in a message sequencing between an EV and a grid (hereinafter referred to as `early renegotiation method' for short) according to an exemplary embodiment of the present disclosure.
FIG. 5 is a flowchart illustrating an early renegotiation method according to another exemplary embodiment of the present disclosure.
FIG. 6 is a flowchart illustrating an early renegotiation method according to another exemplary embodiment of the present disclosure.
FIG. 7 is a block diagram of main components of an apparatus for performing early renegotiation in a message sequencing between an EV and a grid (hereinafter simply referred to as an `early renegotiation apparatus') according to another exemplary embodiment of the present disclosure.
FIG. 8 is a block diagram schematically illustrating program instructions or software modules corresponding thereto in form of units loadable into a processor of the early renegotiation apparatus of FIG. 7.

### DETAILED DESCRIPTION

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Terms used in the present specification are defined as follows.

"Electric vehicle (EV)" may refer to an automobile defined in regulations such as 49 CFR § 523.3 or the like. The EV may be used on highways and driven by electricity supplied from a vehicle-mounted energy storage device such as a battery rechargeable from a power source outside the vehicle. The power supply source may include a residence, a public electric service, or a generator using vehicle-mounted fuel. The EV may be referred to as an electric car, an electric automobile, an electric road vehicle (ERV), a plug-in vehicle (PV), a plug-in vehicle (xEV), or the like, the xEV may be referred to as or classified into a plug-in all-electric vehicle or battery electric vehicle (BEV), a plug-in electric vehicle (PEV), a hybrid electric vehicle (HEV), a hybrid plug-in electric vehicle (HPEV), a plug-in hybrid electric vehicle (PHEV), or the like.

"Plug-in Electric Vehicle (PEV)" may refer to an EV that recharges the on-vehicle primary battery by connecting to the power grid.

"Wireless power charging system (WCS)" may refer to a system for wireless power transfer, alignment, and communication between a ground assembly (GA) and a vehicle assembly (VA).

"Wireless power transfer (WPT)" may refer to a technology that transfers or receives electric power to and from an EV through non-contact means such as electromagnetic induction and resonance from a power source such as utility, grid, energy storage device, and fuel cell generator.

"Utility": A set of systems which supply electrical energy and may include a customer information system (CIS), an advanced metering infrastructure (AMI), rates and revenue system, etc. The utility may provide the EV with energy based on a rates table and discrete events. Additionally, the utility may provide information about certification of EVs, interval of power consumption measurements, and a tariff.

"Smart charging": A system in which EVSE and/or PEV communicate with power grid to optimize charging ratio or discharging ratio ofEV by reflecting capacity of the power grid or expense of use.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupling": Magnetic coupling between two coils. In the present disclosure, coupling between the GA Coil and the VA Coil.

"Original equipment manufacturer (OEM)": An EV manufacturer or a server operated by the EV manufacturer. It may include a root certification authority (CA) or a root certification server that issues an OEM root certificate.

"Power grid operator (V2G operator)": A primary actor participating in V2G communication using a transmission protocol, or an entity for initiation of a blockchain for automatic authentication of an EV or EV user and creation of a smart contract on the blockchain. It may include at least one trusted certification authority or trusted certification server.

"Charging service operator (or, mobility operator (MO))": One of entities within a PnC architecture that have a contractual relationship with an EV owner regarding charging, approval, and payment to enable an EV driver to charge an EV battery at a charging station. It may include at least one certification authority or certification server that issues and manages its own certificate. The charging service operator may be referred to as a mobility operator.

"Charge service provider (CSP)": An entity responsible for managing and authenticating a credential of an EV user, and performing a role of providing billing and other value-added services to customers. It may correspond to a special type of MO, and may be implemented in a combined form with MO.

"Charging station (CS)": A facility or device that has one or more EV supply equipment and actually performs charging of an EV.

"Charging station operator (CSO)": An entity that is connected to a power grid and manages power in order to supply power requested by an EV. It may be a term of the same concept as a charge point operator (CPO) or an e-mobility service provider (eMSP), or it may be a term of a concept included in the CPO or eMSP or including the CPO or eMSP. The CSO, CPO or eMSP may include at least one certification authority that issues or manages its own certificate.

"e-mobility authentication identifier (eMAID)": A unique identifier that links a contract certificate to a payment account of an owner of an electromobility that uses electricity. In exemplary embodiments, the mobility authentication identifier may include an identifier of an EV certificate or an identifier of a provisioning certificate. The term eMAID may be replaced to refer to `e-mobility account identifier' or may be replaced with a contract ID.

"Clearing house (CH)": An entity that handles cooperation matters between MOs, CSPs, and CSOs. It can act as an intermediary that facilitates approval, billing, and adjustment procedures for EV charging service roaming between two parties.

"Roaming": Information exchanges and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

Hereinafter, exemplary embodiments of the present disclosure will be explained in detail by referring to accompanying figures.

A method for early renegotiation (hereinafter referred to as `early renegotiation method' for short) in message sequencing between an EV and a grid according to exemplary embodiments of the present disclosure may include a process for an SECC of a charging station or a secondary actor connected to the SECC to quickly change a service procedure through service renegotiation while performing a message exchange or a charging process between the EV and the charging station.

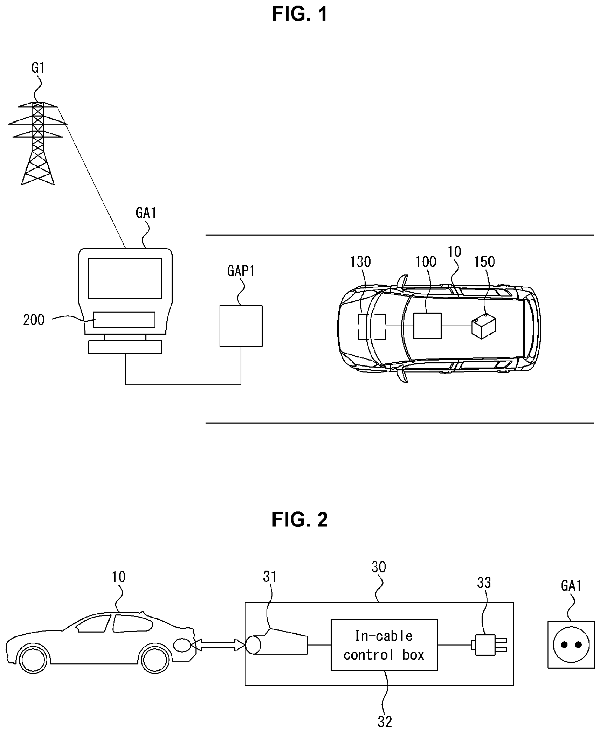

FIG. 1 is a conceptual diagram for describing an EV wireless power transfer structure to which an early renegotiation method according to an exemplary embodiment of the present disclosure is applicable.

As shown in FIG. 1, wireless power transfer (WPT) for an electric vehicle (hereinafter, `EV') 10 may be defined as a process of transferring an electrical energy of a supply network from a supplier-side device to a consumer-side device through a magnetic field in a state of magnetic induction or magnetic resonance without current flow through a galvanic connection. The wireless power transfer may be used to charge a battery 150 of the EV 10 by transferring power from a charging station (GA1) to the EV 10.

The EV 10 may include a reception pad 130 having a reception coil for wirelessly receiving an electromagnetic energy from a transmission pad GAP1 of the charging station GA1. The reception coil of the reception pad 130 receives a magnetic energy from a transmission coil of the transmission pad GAP1 of the charging station GA1 by electromagnetic induction or magnetic resonance. The magnetic energy received by the EV 10 is converted into an induced current, and the induced current is rectified into a DC current and then used to charge the battery 150.

The charging station GA1 may receive power from a commercial power grid G1 or a power backbone and supply energy to the EV 10 through the transmission pad GAP1. An EV supply equipment (EVSE) corresponding to the charging station GA1 may be located in various places such as a garage or parking lot belonging to the home of the owner of the EV 10, a parking area for EV charging at a gas station, or a parking area at a shopping center or office building.

The charging station GA1 may communicate with a power infrastructure management system or infrastructure server that manages the power grid G1 through wired/wireless communication. In addition, the charging station GA1 may perform wireless communication with the EV 10.

The wireless communication may include wireless LAN (WLAN) communication based on Wi-Fi according to the IEEE 802.11 protocols, and may also include P2PS communication using a low frequency (LF) magnetic field signal and/or a low power excitation (LPE) signal. The wireless communication between the charging station GA1 and the EV 10 may include one or more of various communication schemes such as Bluetooth, Zigbee, and cellular.

In addition, the EV 10 and the charging station GA1 may perform a charging process by exchanging messages according to an extensible markup language (XML) or an efficient XML interchange (EXI) based data expression format. That is, communication for the charging process may be performed between an EVCC and a supply equipment communication controller (SECC) through a wireless LAN or the like.

During a communication process for the charging process, the EV may first verify an identity of the charging station to identify whether it is a trusted facility, and establish a secure channel with the charging station to protect communication from unauthorized access. The secure channel may be established by a transport layer security (TLS). A TLS session may be performed according to a TLS session establishment procedure after an Internet protocol (IP)-based communication connection establishment procedure.

FIG. 2 is a conceptual diagram for describing an EV wired charging structure to which an early renegotiation method according to an exemplary embodiment of the present disclosure is applicable.

As shown in FIG. 2, an EV wired charging may be performed by connecting the EV 10 to a power supply circuit of a charging station through a charging cable 30.

The EV 10 may have a vehicle inlet connectable to a vehicle connector of the charging cable 30. The vehicle inlet provided in the EV 10 may support slow charging, fast charging, or both slow charging and fast charging.

In addition, the EV 10 may include an on-board charger to support slow charging or charging through AC power supplied from a general power system. During slow charging, the on-board charger boosts the AC power supplied by wire from the outside, converts it into DC power, and supplies it to a battery built into the EV 10. On the other, when DC power for fast charging is supplied to the vehicle inlet, the DC power may be supplied and charged to the battery without passing through the on-board charger.

The charging station may include a power supply circuit (not shown) that supplies power to the EV 10 and a communication controller that communicates with the EV 10.

Meanwhile, the charging cable 30 may include a vehicle connector 31 and a plug 33, and may be used for the EV and an entity of the grid to communicate with each other in a power line communication (PLC) scheme.

The vehicle connector 31 is a connection part that can be electrically connected to the EV 10, and the plug 33 may be connected to a socket-outlet 40 of a charging device or a power supply device of the charging station. The socket-outlet 40 refers to a connection point between the charging device of the charging station and the plug 33 or the vehicle inlet, but the present disclosure is not limited thereto, and the socket-outlet 40 may mean a connection point between the plug or charging cable 30 and a charging device installed in various places. For example, the socket-outlet 40 may mean a wall jack, etc. installed in a charging facility such as a garage or parking lot belonging to the home of the owner of the EV 10, a parking area allocated for EV charging at a gas station, or a parking area at a shopping center or workplace, as well as a commercial charging station facility.

In addition, the charging cable 30 may be configured to further include an in-cable control box (ICCB) 32. The in-cable control box 32 may communicate with the EV 10 to receive status information of the EV or control a process of charging power to the EV 10.

The ICCB 32 may correspond to a supply equipment communication controller (SECC) to be described later. The EV 10 and the ICCB 32 may be connected to each other through power line communication, and the ICCB 32 and the secondary actor may be connected to each other through at least one of wired and wireless communication networks.

In the following description, a sequence refers to a sequence in which a service call or message is transmitted/received or processed between an electric vehicle communication controller (EVCC) and a supply equipment communication controller (SECC). This sequence may be specified by national or international standard documents, industry standard documents, or the like. Therefore, if a predetermined sequence is not considered, improper processing results may occur, or in the worst case, related data or related components or devices may be damaged. In addition, a sequencing or a message sequencing refers to controlling a sequence flow by initiating messages one by one or step by step, and such the operation can be guaranteed by the EVCC and/or SECC.

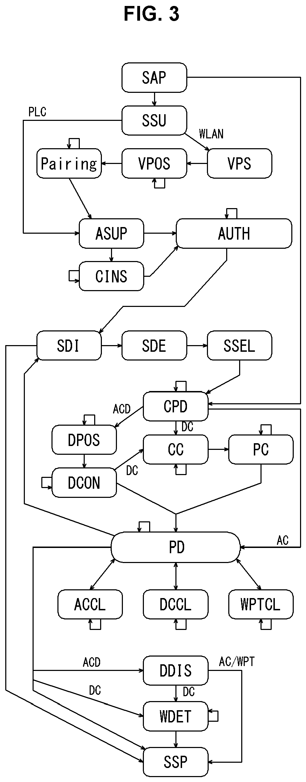

FIG. 3 is a block diagram illustrating a message sequencing for vehicle-to-grid (V2G) communication states in a comparative example.

As shown in FIG. 3, V2G communication states of a comparative example may include a supported application protocol (SupportedAppProtocol, SAP) session setup (SessionSetup, SSU) state, vehicle positioning setup (VehiclePositioningSetup, VPS) state, vehicle positioning (VehiclePositioning, VPOS) state, pairing state, authorization setup (AuthorizationSetup, ASUP) state, certificate installation (CertificateInstallation, CINS) state, authorization (AUTH) state, service discovery (ServiceDiscovery, SDI) state, service detail (ServiceDetail, SDE) state, service selection (ServiceSelection, SSEL) state, charging parameter discovery (ChargeParameterDiscovery, CPD) state, device positioning (DevicePositioning, DPOS) state, device connection (DeviceConnection, DCON) state, cable check (CableCheck, CC) state, precharge (PreCharge, PC) state, power delivery (PowerDelivery, PD) state, AC charging loop (AC_ChargeLoop, ACCL) state, DC charging loop (DC_ChargeLoop, DCCL) state, wireless power transfer charging loop (WPT_ChargeLoop, WPTCL) state, device disconnection (DeviceDisconnection, DDIS) state, welding detection (WeldingDetection, WDET) state, and session stop (SessionStop, SSP) state.

At least some communication states may be processed or transitioned therebetween based on power line communication (PLC), wireless local area network (WLAN), and/or the like. In addition, at least some communication states may be processed or transitioned therebetween according to a process for AC charging scheme or DC charging scheme. In addition, at least some communication states may be processed or transitioned therebetween according to a scheme using wireless power transfer (WPT) or automatic connection device (ACD).

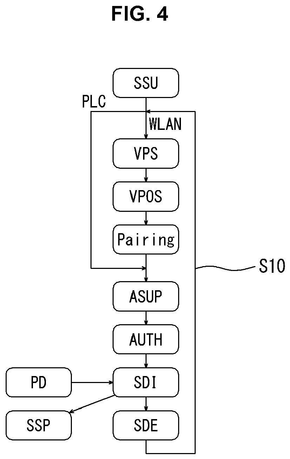

FIG. 4 is a flowchart for describing an early renegotiation method in a message sequencing between an EV and a grid (hereinafter referred to as `early renegotiation method' for short) according to an exemplary embodiment of the present disclosure.

As shown in FIG. 4, an early renegotiation method may be applied when performing a message sequencing based on PLC or WLAN in each communication state such as the session setup (SessionSetup, SSU) state, vehicle positioning setup (VehiclePositioningSetup, VPS) state, vehicle positioning (VehiclePositioning, VPOS) state, pairing state, authorization setup (AuthorizationSetup, ASUP) state, authorization (AUTH) state, service discovery (ServiceDiscovery, SDI) state, service detail (ServiceDetail, SDE) state, power delivery (PowerDelivery, PD) state, and session stop (SessionStop, SSP) state.

More specifically, the early renegotiation method, performed by the EV in a message sequence between the EV and the grid, may be performed in a state where a transport layer security (TLS) connection is established before the EV or the EVCC mounted on the EV receives a service detail response message from the SECC.

After the TLS connection is completed, the EVCC may transmit an SAP request message to the SECC in a supported application protocol (SAP) configured state. After receiving an SAP response message for the SAP request message, the EVCC may transmit a session setup request message to the SECC within a preset sequence performance timeout (Sequence_Performance_Timeout) period.

Depending on a selection or decision in the session setup (SSU) state, the EVCC may process or transition the communication state based on PLC or WLAN.

Next, the EVCC may receive a service detail response (ServiceDetailRes) message corresponding to the service detail request (ServiceDetailReq) message from the SECC in the service detail (SDE) state for configuring service details. Of course, the SECC may transmit/receive messages for service discovery (SDI) with the SECC before receiving the service detail response message.

Next, the EVCC may search for pre-stored or pre-configured compatible parameter(s) for DC charging or AC charging based on the service detail response message.

Next, if compatible parameter(s) are not found, the EVCC may change its state from the service detail (SDE) state to the vehicle positioning setup (VPS) state for vehicle positioning or pairing using ACD or wireless power transfer (S10).

The change of the state may refer to changing the current state or the current communication state, and may include transitioning, moving, or jumping from a first state to a second state.

Such the change of the state may be performed when a session stop response (SessionStopRes) message having a response code (ResponseCode) set to `OK' is received in a state where a charge progress parameter of a last session stop request (SessionStopReq) message of the previous sequence is set to 'Renegotiation' or ` ServiceRenegotiation' .

Then, the EVCC may transmit a vehicle positioning setup request (VehiclePositioningSetupReq) message to the SECC in the vehicle positioning setup (VPS) state. The transmission of the vehicle positioning setup request message to the SECC may be performed within a preset first sequence performance timeout period. The first sequence performance timeout period may have a length of 2 seconds or more and 40 seconds or less.

Meanwhile, the service discovery (SDI) state of the aforementioned EVCC may move to the session stop (SessionSetup, SSP) state, and may be in a state that has moved from the power delivery (PD) state through service renegotiation.

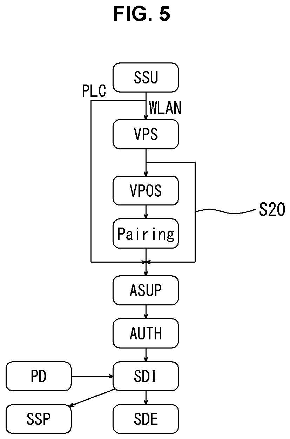

FIG. 5 is a flowchart illustrating an early renegotiation method according to another exemplary embodiment of the present disclosure.

As shown in FIG. 5, an early renegotiation method, similarly to the early renegotiation method described above with reference to FIG. 4, may be applied when performing a message sequencing based on PLC or WLAN in communication states such as the session setup (SSU) state, vehicle positioning setup (VPS) state, vehicle positioning (VPOS) state, pairing state, authorization setup (ASUP) state, authorization (AUTH) state, service discovery (SDI) state, service detail (SDE) state, power delivery (PD) state, and session stop (SSP) state.

More specifically, the early renegotiation method may be performed in a state in which a TLS connection is established before the EV or the EVCC mounted on the EV receives a vehicle positioning setup response message from the SECC. In this case, after the TLS connection is completed, the EVCC may transmit an SAP request message to the SECC in a supported application protocol (SAP) configured state. After receiving an SAP response message corresponding to the SAP request message, the EVCC may transmit a session setup request (SessionSetupReq) message to the SECC within a preset sequence performance timeout (Sequence_Performance_Timeout) period. Depending on a selection or decision in the session setup (SSU) state, the EVCC may process or transition the communication state based on PLC or WLAN.

Next, the EVCC may receive a VPS response message corresponding to a vehicle positioning setup (VPS) request message from the SECC over the WLAN.

Next, based on information included in the VPS response message, the EVCC may search for a compatible method for positioning or pairing for ACD or wireless power transfer.

Next, if there is no compatible method or a compatible method cannot be found, the EVCC may jump from the vehicle positioning setup (VPS) state to the authorization setup (ASUP) state in order to proceed to DC charging or AC charging (S20). The jump to the authorization setup (ASUP) state may be performed when a session step request message having a response code (ResponseCode) set to `OK' is received in a state in which a charging progress parameter of a last session stop request (SessionStopReq) message of the previous sequence is set to 'Renegotiation' or ` ServiceRenegotiation' .

Then, the EVCC may transmit an authorization setup request (AuthorizationSetupReq) message to the SECC in the authorization setup (ASUP) state. The transmission of the authorization setup request message to the SECC may be performed within a preset second sequence performance timeout period. The preset second sequence performance timeout period may have a length of several seconds to several tens of seconds.

Meanwhile, in the early renegotiation method, the EVCC may transmit an authorization setup request message to the SECC and then transmit a service discovery request message to the SECC. The EVCC may move from the service discovery (SDI) state to the session stop (SessionSetup, SSP) state, and may be moved from the power delivery (PD) state to the service discovery (SDI) state through service renegotiation.

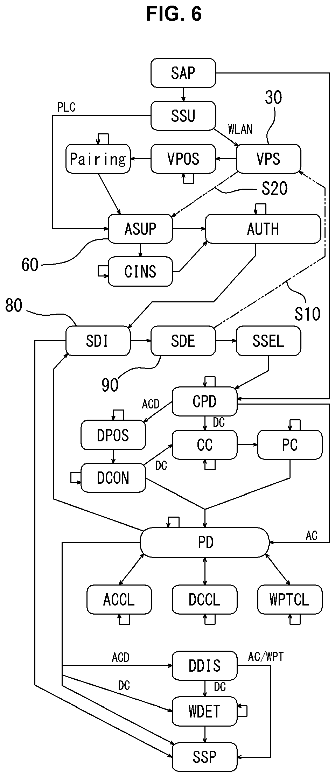

FIG. 6 is a flowchart illustrating an early renegotiation method according to another exemplary embodiment of the present disclosure.

As shown in FIG. 6, after the EVCC mounted on the EV receives an SAP response message from the SECC in response to an SAP request message in a SAP configured state, the EVCC may transmit a session setup request (SessionSetupReq) message to the SECC within a preset sequence performance timeout period in the session setup (SSU) state.

When the EVCC uses PLC, after receiving a session setup response (SessionSetupRes) message corresponding to the session setup request (SessionSetupReq) message, the EVCC may move or transition to the authorization setup (ASUP) state 60, and then transmit an authorization setup request (AuthorizationSetupReq) message to the SECC within a preset timeout period.

In addition, after receiving an authorization setup response (AuthorizationSetupRes) message in which a response code (ResponseCode) is set to 'OK' and a parameter CertificateInstallationService is set to 'True', the EVCC may transmit a certificate installation request (CertificateInstallationReq) message to the SECC within a preset timeout period in the certificate installation (CertificateInstallation, CINS) state for installation or update of a contract certificate.

When the EVCC receives an authorization setup response (AuthorizationSetupRes) message in which the response code is set to `OK' and the parameter certificate installation service is set to 'False', the EVCC may transmit an authorization request (AuthorizationSetupRes) to the SECC within a preset timeout period in the authorization (AUTH) state.

On the other hand, when the EVCC uses WLAN, after receiving the session setup response message, the EVCC may move or transition to the vehicle positioning setup (VPS) state 30, and then transmit a vehicle positioning setup request (VehiclePositioningSetupReq) message to the SECC.

In addition, after receiving a vehicle positioning setup response (VehiclePositioningSetupRes) message, according to configuration of parameters in the vehicle positioning setup response message, the EVCC may perform a second sequence for early renegotiation, similarly to some message sequences described above with reference to FIG. 5.

The second sequence may comprise: searching for a compatible method for positioning or pairing for ACD or wireless power transfer based on information included in the vehicle positioning setup (VPS) response message; jumping (S20) from the VPS state to the authorization setup (ASUP) state to proceed to DC charging or AC charging; and transmitting an authorization setup request (AuthorizationSetupReq) message to the SECC within a preset timeout period in the authentication setup (ASUP) state.

Of course, after receiving the vehicle positioning setup response message, according to another configuration of parameters in the vehicle positioning setup response message, the EVCC may move or transition to the authorization setup (ASUP) state 60 after sequentially transitioning from the vehicle positioning setup (VPS) state 30 to the vehicle positioning state and the pairing state.

In addition, after authorization is completed, the EVCC may transition from the authorization (AUTH) state to the service discovery (SDI) state 80, and transition to the service detail (ServiceDetail, SDE) state 90. Here, the SDI state 80 may transition to the session stop (SessionStop, SSP) state or transition from the power delivery (PowerDelivery, PD) state through service renegotiation.

That is, after receiving an authorization response (AuthorizationRes) message with a specific parameter (EVSEProcessing) set to 'Finished' and a response code set to 'OK', the EVCC may transmit a service discovery request (ServiceDiscoveryReq) message within a preset timeout period. The message transmitted to the SECC may be delivered to a target secondary actor through the SECC or via the SECC.

After receiving a service discovery response (ServiceDiscoveryRes) message having a response code set to 'OK', the EVCC may transmit a service detail request (ServiceDetailReq) message to the SECC within a preset timeout period.

After receiving a service detail response (ServiceDetailRes) message with a response code set to 'OK', if an additional service detail request message is needed to retrieve details from the SECC, the EVCC may transmit another service detail request message to the SECC within a preset timeout period.

In addition, after receiving a service detail response (ServiceDetailRes) message in the service detail (SDE) state 90, according to configuration of specific parameters in the service detail response message, the EVCC may perform a first sequence for early renegotiation, similarly to some message sequences described with reference to FIG. 4.

The first sequence may comprise: searching for pre-stored or pre-configured compatible parameter(s) for DC charging or AC charging based on the service detail response message; if compatible parameter(s) are not found, jumping or transitioning (S10) to the vehicle positioning setup (VPS) state from the SDE state for vehicle positioning or paring using ACD or wireless power transfer; and transmitting a vehicle position setup request (VehiclePositioningSetupReq) message to the SECC in the VPS state.

On the other hand, the EVCC may be configured to remember a selected authorization service (SelectedAuthorizationService, SAS) already used during the current service session or to remember an SAD and a contract certificate chain (ContractCertificateChain) so as not to fall into a continuous loop.

In addition, the remaining communication states such as the service selection (ServiceSelection, SSEL) state, charging parameter discovery (ChargeParameterDiscovery, CPD) state, device positioning (DevicePositioning, DPOS) state, device connection (DeviceConnection, DCON) state, cable check (CableCheck, CC) state, precharge (PC) state, power delivery (PowerDelivery, PD) state, AC charging loop (AC_ChargeLoop, ACCL) state, DC charging loop (DC_ChargeLoop, DCCL) state, wireless power transfer charging loop (WPT_ChargeLoop, WPTCL) state, device disconnection (DeviceDisconnection, DDIS) state, welding detection (WeldingDetection, WDET) state, session stop (SessionStop, SSP) state, and the like may be processed or transitioned based on PLC, WLAN, and/or the like. In addition, at least some communication states may be processed or transitioned therebetween according to a process for AC charging scheme or DC charging scheme. In addition, at least some communication states may be processed or transitioned therebetween according to a scheme using WPT or ACD. Since the processing or transition of these communication states is already well known, a detailed description thereon will be omitted.

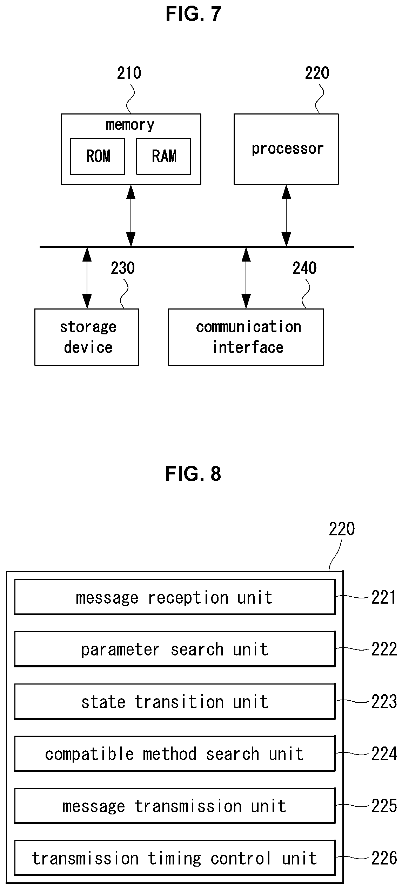

FIG. 7 is a block diagram of main components of an apparatus for performing early renegotiation in a message sequencing between an EV and a grid (hereinafter simply referred to as an `early renegotiation apparatus') according to another exemplary embodiment of the present disclosure. FIG. 8 is a block diagram schematically illustrating program instructions or software modules corresponding thereto in form of units loadable into a processor of the early renegotiation apparatus of FIG. 7.

As shown in FIG. 7, the early renegotiation apparatus may be mounted on or coupled to the EV or EVCC, and in another implementation, it may be mounted on or coupled to an electric vehicle supply equipment (EVSE) or the SECC.

In addition, the early renegotiation apparatus may include a processor 220 and a memory 210, and may further include a storage device 230 and a communication interface 240 according to implementation.

The memory 210 may store program instructions or software modules. The processor 220 may implement the early renegotiation method by executing the program instructions or software modules stored in the memory 210.

In addition, at least some of the components of the early renegotiation apparatus, including the processor 220 and the memory 210, may be connected to each other through a bus to exchange signals and data. The memory 210, the processor 220 coupled to the memory 210, and program instructions executed by the processor 220 may implement the EVCC or the SECC of the EVSE.

The memory 210 may include, for example, volatile memory such as random access memory (RAM) and non-volatile memory such as read only memory (ROM). The memory 210 may load program instructions stored in the storage device 230 and provide them to the processor 220 so that the processor 220 can execute them.

The processor 220 may execute program instructions stored in the memory 210 and/or storage device 230. The processor 220 may include at least one of a central processing unit (CPU), graphics processing unit (GPU), or other processors capable of performing the early renegotiation method according to the present disclosure.

The storage device 230 may be a recording medium suitable for storing the program instructions and data, such as a magnetic medium such as a hard disk, floppy disk, and magnetic tape, an optical medium such as a compact disk read only memory (CD-ROM), digital versatile disk (DVD), a magneto-optical medium such as a floptical disk, or a semiconductor memory such as a flash memory, erasable programmable ROM (EPROM), or solid state drive (SSD) made based thereon.

When executed by the processor 220, the program instructions may cause the processor 220 to perform: receiving a service detail response message from a supply equipment communication controller (SECC); searching for a compatible parameter for direct current charging or alternating current charging based on the service detail response message; if the compatible parameter is not found, jumping from a service detail state to a vehicle positioning setup state for vehicle positioning using an automatic connection device or wireless power transfer; transmitting a vehicle positioning setup request message to the SECC in the vehicle positioning setup state; receiving a vehicle positioning setup response message from the SECC; searching for a compatible method for positioning or pairing for an automatic connection device or wireless power transfer; if the compatible method is not available, changing a state from the vehicle positioning setup state to an authorization setup state in order to proceed to direct current charging or alternating current charging; and transmitting an authorization setup request message to the SECC in the authorization setup state.

When the aforementioned program instructions are executed by the processor 220, as shown in FIG. 8, they may be loaded into the processor 220 in the form of software modules or software units. The software modules may be configured to include a message reception unit 221, a parameter search unit 222, a state transition unit 223, a compatible method search unit 224, a message transmission unit 225, and a transmission timing control unit 226.

The message reception unit 221 may perform a step of receiving a service detail response message from the SECC or a step of receiving a vehicle positioning setup response message from the SECC. The parameter search unit 222 may perform a step of finding compatible parameters for DC charging or AC charging based on the service detail response message.

If compatible parameters are not found, the state transition unit 223 may perform a step of jumping from the service detail state to the vehicle positioning setup state in order to proceed to vehicle positioning using ACD or WPT. If there is no compatible method, the compatible method search unit 224 may perform a step of changing the state from the vehicle positioning setup state to the authorization setup state in order to proceed to DC charging or AC charging. At least one of the state transition unit 223 and the compatible method search unit 224 may receive record information or configuration information of the corresponding configuration or parameters so as be executed when a session stop response message with a response code set to `OK' is received in a state in which a ChargeProgress parameter of a last session stop request message of a previous sequence is set to 'ServiceRenegotiation'.

The message transmission unit 225 may perform a step of transmitting the vehicle positioning setup request message to the SECC in the vehicle positioning setup state, or a step of transmitting the authorization setup request message to the SECC in the authorization setup state. In addition, the transmission timing control unit 226 may provide, to the message transmission unit 225, timing for transmitting a session setup request message to the SECC within a preset sequence performance timeout period after receiving an SAP response message corresponding to an SAP request message, timing for transmitting a vehicle positioning setup request message to the SECC within a preset sequence performance timeout period, and timing for transmitting an authorization setup request message to the SECC within a preset sequence performance timeout period.

Referring again to FIG. 7, the communication interface 240 may include multiple communication subsystems such as a WLAN interface, a PLC module, a peer to peer signaling (P2PS) controller, a gateway (G/W), or combinations thereof, and may function so that the early renegotiation apparatus can transmit/receive signals and data or communicate with at least one external device.

Meanwhile, as described above, the apparatus and method according to the present disclosure may be implemented as computer-readable programs or codes on a computer-readable recording medium. The computer-readable recording medium may include all types of storage devices in which data that can be read by a computer system is stored. In addition, the computer-readable recording medium may be distributed to computer systems connected through a network to store and execute the computer-readable programs or codes in a distributed manner.

The computer-readable recording medium may include hardware devices specially configured to store and execute program instructions, such as ROM, RAM, and flash memory. The program instructions may include high-level language codes that can be executed by a computer using an interpreter or the like as well as machine codes generated by a compiler.

Some aspects of the present disclosure have been described above in the context of a device but may be described using a method corresponding thereto. Here, blocks or the device corresponds to operations of the method or characteristics of the operations of the method. Similarly, aspects of the present disclosure described above in the context of a method may be described using blocks or items corresponding thereto or characteristics of a device corresponding thereto. Some or all of the operations of the method may be performed, for example, by (or using) a hardware device such as a microprocessor, a programmable computer or an electronic circuit. In some embodiments, at least one of most important operations of the method may be performed by such a device.

In embodiments, a programmable logic device (e.g., a field-programmable gate array) may be used to perform some or all of functions of the methods described herein. In embodiments, the field-programmable gate array may be operated with a microprocessor to perform one of the methods described herein. In general, the methods are preferably performed by a certain hardware device.

While the present disclosure has been described above with respect to embodiments thereof, it would be understood by those of ordinary skill in the art that various changes and modifications may be made without departing from the technical conception and scope of the present disclosure defined in the following claims.

## Claims

1. An early renegotiation method performed by an electric vehicle in a message sequence between the electric vehicle and a grid, the early renegotiation method comprising:
receiving a service detail response message from a supply equipment communication controller (SECC);
searching for a compatible parameter for direct current charging or alternating current charging based on the service detail response message;
changing a state from a service detail state to a vehicle positioning setup state for vehicle positioning using an automatic connection device or wireless power transfer if the compatible parameter is not found; and
transmitting a vehicle positioning setup request message to the SECC in the vehicle positioning setup state.

2. The early renegotiation method according to claim 1, wherein the changing of the state is performed when a session stop response message having a response code set to `OK' is received in a state in which a charge progress parameter of a last session stop request message of a previous sequence is set to 'Renegotiation' or ` ServiceRenegotiation' .

3. The early renegotiation method according to claim 1, wherein transmitting the vehicle positioning setup request message to the SECC is performed within a preset sequence performance timeout period.

4. The early renegotiation method according to claim 1, further comprising, before receiving the service detail response message, transmitting and receiving messages for service discovery with the SECC.

5. The early renegotiation method according to claim 1, further comprising, before receiving the service detail response message, establishing a transport layer security (TLS) connection.

6. The early renegotiation method according to claim 5, further comprising transmitting a supported application protocol (SAP) request message to the SECC after the TLS connection is completed.

7. The early renegotiation method according to claim 6, further comprising, after receiving an SAP response message for the SAP request message, transmitting a session setup request message to the SECC within a preset sequence performance timeout period.

8. An early renegotiation method performed by an electric vehicle in a message sequence between the electric vehicle and a grid, the early renegotiation method comprising:
receiving a vehicle positioning setup response message from a supply equipment communication controller (SECC);
searching for a compatible method for positioning or pairing for an automatic connection device or wireless power transfer;
jumping from a vehicle positioning setup state to an authorization setup state in order to proceed to direct current charging or alternating current charging if the compatible method is not available; and
transmitting an authorization setup request message to the SECC in the authorization setup state.

9. The early renegotiation method according to claim 8, wherein the jumping is performed when a session stop response message having a response code set to `OK' is received in a state in which a charge progress parameter of a last session stop request message of a previous sequence is set to 'Renegotiation' or 'ServiceRenegotiation'.

10. The early renegotiation method according to claim 8, wherein the transmitting of the authorization setup request message to the SECC is performed within a preset sequence performance timeout period.

11. The early renegotiation method according to claim 8, further comprising, after transmitting the authorization setup request message to the SECC, transmitting a service discovery request message to the SECC.

12. The early renegotiation method according to claim 8, further comprising, before receiving the vehicle positioning setup response message, establishing a transport layer security (TLS) connection.

13. The early renegotiation method according to claim 12, further comprising transmitting a supported application protocol (SAP) request message to the SECC after the TLS connection is completed.

14. The early renegotiation method according to claim 13, further comprising, after receiving an SAP response message for the SAP request message, transmitting a session setup request message to the SECC within a preset sequence performance timeout period.

15. An apparatus for performing early renegotiation in a message sequence between an electric vehicle and a grid, the apparatus comprising:
a memory storing program instructions; and
a processor that is connected to the memory and executes the program instructions stored in the memory,
wherein when executed by the processor, the program instructions cause the processor to perform:
receiving a service detail response message from a supply equipment communication controller (SECC);
searching for a compatible parameter for direct current charging or alternating current charging based on the service detail response message;
jumping from a service detail state to a vehicle positioning setup state for vehicle positioning using an automatic connection device or wireless power transfer if the compatible parameter is not found;
transmitting a vehicle positioning setup request message to the SECC in the vehicle positioning setup state;
receiving a vehicle positioning setup response message from the SECC;
searching for a compatible method for positioning or pairing for an automatic connection device or wireless power transfer;
changing a state from the vehicle positioning setup state to an authorization setup state in order to proceed to direct current charging or alternating current charging if the compatible method is not available; and
transmitting an authorization setup request message to the SECC in the authorization setup state.

16. The apparatus according to claim 15, wherein the program instructions further cause the processor to perform the changing of the state or the jumping when a session stop response message having a response code set to 'OK' is received in a state in which a charge progress parameter of a last session stop request message of a previous sequence is set to `ServiceRenegotiation'.

17. The apparatus according to claim 15, wherein the program instructions further cause the processor to perform: transmitting the vehicle positioning setup request message to the SECC within a preset sequence performance timeout period.

18. The apparatus according to claim 15, wherein the program instructions further cause the processor to perform: transmitting the authorization setup request message to the SECC within a preset sequence performance timeout period.

19. The apparatus according to claim 15, wherein the program instructions further cause the processor to perform: after transmitting the authorization setup request message to the SECC in the authorization setup state, transmitting a service discovery request message to the SECC.

20. The apparatus according to claim 15, wherein the program instructions further cause the processor to perform: before receiving the service detail response message, transmitting and receiving messages for service discovery with the SECC.
